# EUROPEAN PATENT SPECIFICATION

(11) **EP 2 950 473 B1**
(45) Date of publication and mention of the grant of the patent: **17.07.2019**
(21) Application number: 13807346.5
(22) Date of filing: 23.08.2013
(51) Int. Cl.: H04L 1/00

(54) **ANTI-PACKET-LOSS REAL-TIME COMMUNICATION METHOD, SYSTEM AND RELATED DEVICE BASED ON HIERARCHICAL CODING**
ECHTZEITKOMMUNIKATIONSVERFAHREN, SYSTEM UND ENTSPRECHENDE VORRICHTUNG MIT FUNKTION GEGEN PAKETVERLUST AUF BASIS EINER HIERARCHISCHEN CODIERUNG
PROCÉDÉ DE COMMUNICATION EN TEMPS RÉEL AVEC PROTECTION CONTRE LA PERTE DE PAQUETS, SYSTÈME ET DISPOSITIF ASSOCIÉ REPOSANT SUR UN CODAGE HIÉRARCHIQUE

(30) Priority: 22.02.2013 CN 201310057423
(43) Date of publication of application: 02.12.2015
(73) Proprietor: ZTE Corporation, Shenzhen, Guangdong 518057 (CN)
(72) Inventor: LIN, Ya, Shenzhen Guangdong 518057 (CN); LI, Jiazhou, Shenzhen Guangdong 518057 (CN); RUAN, Yaping, Shenzhen Guangdong 518057 (CN)
(74) Representative: Gevers Patents
(86) International application number: PCT/CN2013/082203
(87) International publication number: WO 2013/189428

(56) References cited:
- WO-A2-2011/151647
- CN-A- 101 222 296
- CN-A- 101 777 960
- CN-A- 102 446 509
- US-A1- 2004 160 979
- US-A1- 2006 039 280
- MINYI XIE ET AL: "Performance comparison of Hierarchical coding and multiple description coding over lossy networks", INFORMATION NETWORKING (ICOIN), 2011 INTERNATIONAL CONFERENCE ON, IEEE, 26 January 2011 (2011-01-26), pages 341-346, XP031922442, DOI: 10.1109/ICOIN.2011.5723114 ISBN: 978-1-61284-661-3
- ZHEN HUANG ET AL: "Robust Redundancy Scheme for the Repair Process: Hierarchical Codes in the Bandwidth-Limited Systems", JOURNAL OF GRID COMPUTING, KLUWER ACADEMIC PUBLISHERS, DO, vol. 10, no. 3, 3 August 2012 (2012-08-03) , pages 579-597, XP035109741, ISSN: 1572-9184, DOI: 10.1007/S10723-012-9221-8

## Description

### Technical field

The present disclosure relates to the technical field of communications, and in particular to an anti-packet-loss real-time communication method, system and related device.

### Background

In the real-time communication, audio and video media typically are transmitted using a user datagram protocol. Since the user packet protocol is a connectionless transmission protocol, which cannot provide reliable transmission service, packet loss inevitably occurs in network, thus results in voice discontinuousness, image mess, pause or other phenomenon, thereby degrading the quality of calls seriously.

The reason of packet loss may be generally classified into random packet loss and congestion packet loss. Currently, methods for anti-packet loss may generally include interleaving and retransmission. However, the transmission code rate and the transmission location cannot be adjusted in real time according to network conditions in these methods, therefore, the anti-packet-loss performance is poor and is needed to be further improved.

WO-A-2011/151647 discloses a method and system of transmitting video data and multimedia data to a plurality of client radio receivers over an air interface, the method comprising transmitting video data to a plurality of client radio receivers simultaneously using an adaptive encoding/transcoding scheme; and updating the adaptive encoding/transcoding scheme in dependence upon received feedback data. A system and method is also described that includes estimating channel states and distortion levels for a plurality of transmission modes, and then selecting that transmission mode for subsequent data transmission that has the lowest distortion level. Control data items can also be extracted from the first data stream to produce a multimedia data stream and a control data stream and the multimedia data stream is transmitted over a first channel; and the control fata stream is transmitted over a second channel. The received data stream may be put into a plurality of multimedia slices having a predetermined slice size; and encoded into first data packets of a first predetermined size; which in turn are divided into respective integral second data packets of a second predetermined size and which are aggregated into a stream of third data packets of a third predetermined size.

US-A-2006/0039280 discloses a process of sending packets of real-time information at a sender includes steps of initially generating at the sender the packets of real-time information with a source rate greater than zero kilobits per second, and a time or path or combined time/path diversity rate, the amount of diversity initially being at least zero kilobits per second. The process sends the packets, thereby resulting in a quality of service QoS, and optionally obtains at the sender a measure of the QoS. Rate/diversity adaptation decision may be performed at receiver instead. Another step compares the QoS with a threshold of acceptability, and when the QoS is on an unacceptable side of said threshold increases the diversity rate and sends not only additional ones of the packets of real-time information but also sends diversity packets at the diversity rate as increased. Increasing the diversity rate while either reducing or keeping unchanged the overall transmission rate, is an important new improvement in even solely-time-diversity embodiments. In another form of the invention a single-chip integrated circuit includes a processor circuit, and a rate-and-diversity control. Here again, the diversity is contemplated to be time diversity, path diversity, and combined time/path diversity in various embodiments. Other embodiments disclosed encompass other processes, improved packets and packet ensembles, integrated circuits, chipsets, computer add-in cards, information storage articles, systems, computers, gateways, routers, cellular telephone handsets, wireless base station, appliances, and packet networks, and other forms as claimed.

### Summary

In view of the above analysis, the present disclosure is intended to provide an anti-packet-loss real-time communication method, system and related device in order to further improve the performance of anti-packet loss in network.

The object of the present disclosure is mainly achieved by the following technical solutions.

A method for anti-packet-loss real-time communication is provided, as recited in claim 1.

A system for anti-packet-loss real-time communication is provided, as recited in claim 3.

A transmitting end is provided, as recited in claim 4.

A receiving end is provided, as recited in claim 5.

The embodiments of the present disclosure provide an anti-packet-loss real-time communication method, system and related device. A receiving end counts the current network status parameters in real-time and transmits the network status parameters to a transmitting end. The transmitting end adjusts coding parameters and packaging parameters in real time according to the current network status parameter, and assigns a code rate of coded data and a code rate of protected data in the packaged payload according to the coding parameters and the packaging parameters. In other words, the embodiments of the present disclosure perform self-adaptive processing on packet loss or congestion occurring in a network during real-time communication, i.e., adjust the code rate and transmission position of protected data in real time according to network conditions, thereby effectively preventing voice discontinuousness, image mess or pause occurring at a client, and improving the user experience.

### Brief description of the drawings

Fig. 1 is a flow chart of a method for anti-packet-loss real-time communication in accordance with the Embodiment 1 of the present disclosure;
Fig. 2 is a schematic structure diagram of a packaged payload in accordance with the Embodiment 1 of the present disclosure;
Fig. 3 is a schematic structure diagram of a transmitting end in accordance with the Embodiment 3 of the present disclosure;
Fig. 4 is a schematic structure diagram of a receiving end in accordance with the Embodiment 4 of the present disclosure.

### Detailed description

The preferred embodiments of the present disclosure are described in further detail below in conjunction with the accompanying drawings. The accompanying drawings constitute a part of the present disclosure, and are used to explain the principles of the present disclosure together with the embodiments of the present disclosure. For the purpose of clarity and simplicity, when it may obscure the subject matter of the present disclosure, the detail description for the known functions and structures of devices described herein will be omitted.

### Embodiment 1

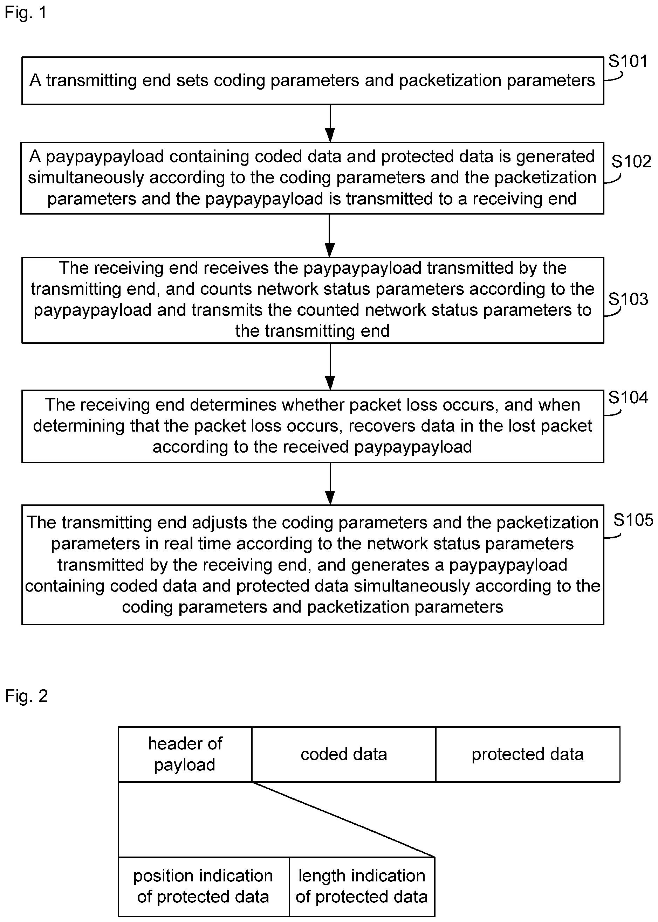

The embodiment of the present disclosure provides a method for anti-packet-loss real-time communication. Referring to Fig. 1, the method includes:
S101: a transmitting end sets coding parameters and packaging parameters;
   it should be noted that the transmitting end sets the coding parameters and the packaging parameters according to a scenario in which the network condition is poor; further, the poor network condition may include the presence of a continuous packet loss, a narrower available bandwidth, a high packet loss rate, etc.;
S102: a payload containing coded data and protected data is generated simultaneously according to the coding parameters and the packaging parameters and the payload is transmitted to a receiving end;
   in the embodiment of the present disclosure, the protected data in the payload is part of or entire data in the coded data;
S103: the receiving end receives the payload transmitted by the transmitting end, and count network status parameters according to the payload, and transmits the counted network status parameters to the transmitting end;
   in the embodiment of the present disclosure, the network status parameters may include one or more of following: a packet loss rate, delay, jitter, a target code rate or a continuous packet loss rate;
S104: the receiving end determines whether packet loss occurs, and when determining that packet loss occurs, the receiving end recovers data in the lost packet according to the received payload; and
S105: the transmitting end adjusts the coding parameters and the packaging parameters in real time according to the network status parameters transmitted by the receiving end, and generates a payload containing coded data and protected data simultaneously according to the coding parameters and packaging parameters.

This step may specifically include that: the transmitting end sets a target code rate according to the network status parameters transmitted by the receiving end and adjusts the coding parameters and the packaging parameters according to the target code rate and the packet loss rate; when the packet loss rate is lower than or equal to a preset packet loss rate threshold, the transmitting end sets a code rate of the coded data only according to the target code rate without addition of protected data; when the packet loss rate is greater than the preset packet loss rate threshold, the transmitting end increases a code rate of the protected data within the limits of the target code rate, wherein the coding parameters may include the code rate of the coded data and the packaging parameters may include the code rate of the protected data. Fig. 2 illustrates a structure diagram of a packaged payload in an embodiment of the present disclosure, which includes a header of the payload, coded data and protected data, wherein the header of the payload indicates the length of the protected data and the position of the protected data.

The method may further include: part of or entire stream is captured from coded data corresponding to the transmission position of the protected data according to the adjusted packaging parameters and the part of or entire stream is taken as protected data; when the continuous packet loss rate is lower than a preset continuous packet loss rate threshold, the transmission position of the protected data is placed in the next frame; and when the continuous packet loss rate is greater than the preset continuous packet loss rate threshold, the transmission position of the protected data is placed in the frame after the next frame, while indication information about the transmission position is added into the payload.

The embodiment of the present disclosure provides an anti-packet-loss real-time communication method. The method includes that: a receiving end counts the current network status parameters in real-time and transmits the network status parameters to a transmitting end; the transmitting end adjusts coding parameters and packaging parameters in real time according to the current network status parameter, and assigns a code rate of coded data and a code rate of protected data in the packaged payload according to the coding parameters and the packaging parameters. The embodiment of the present disclosure performs self-adaptive processing on packet loss or congestion occurring in a network during real-time communication, i.e., adjusts the code rate and transmission position of protected data in real time according to network conditions, thereby effectively preventing voice discontinuousness, image mess or pause occurring at a client, and improving the user experience.

### Embodiment 2

The embodiment of the present disclosure further provides a system for anti-packet-loss real-time communication. The system includes a transmitting end and a receiving end;
The transmitting end may be configured to set coding parameters and packaging parameters initially according to a network condition difference; generate a payload containing coded data and packaged data simultaneously according to the coding parameters and the packaging parameters and transmit the payload to the receiving end, and adjust the coding parameters and the packaging parameters in real time according to network status parameters transmitted by the receiving end, and generate a payload containing coded data and protected data simultaneously according to the adjusted coding parameters and the packaging parameters; and
the receiving end may be configured to receive the payload transmitted by the transmitting end, count the network status parameters according to the payload and transmit the network status parameters to the transmitting end; and determine whether a coded packet is lost according to the coded data transmitted by the transmitting end, and when determining that coded packet is lost, recover the lost coded packet according to the received payload.

### Embodiment 3

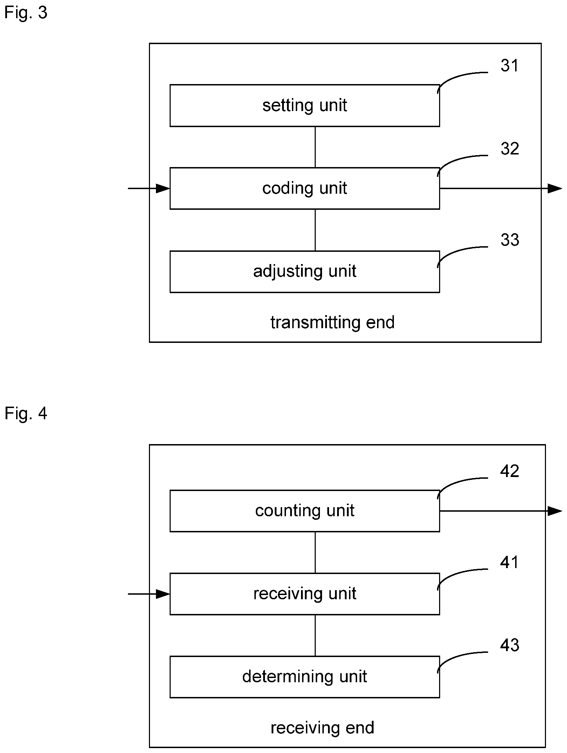

Referring to Fig. 3, the embodiment of the present disclosure provides a transmitting end, which includes a setting unit 31, a coding unit 31 and an adjusting unit 33; wherein,
the setting unit 31 may be configured to set coding parameters and packaging parameters initially according to a network condition difference and transmit the coding parameters and the packaging parameters to the coding unit 32;
the coding unit 32 may be configured to generate a payload containing coded data and protected data simultaneously according to the coding parameters and the packaging parameters transmitted by the setting unit 31 or the coding parameters and packaging parameters adjusted and transmitted by the adjusting unit and transmit the payload to a receiving end;
the adjusting unit 33 may be specifically configured to set a target code rate according to the network status parameters transmitted by the receiving end; when a packet loss rate is lower than or equal to a preset packet loss rate threshold, set a code rate of coded data only according to the target code rate without addition of protected data; when the packet loss rate is greater than the preset packet loss rate threshold, increase a code rate of the protected data within the limits of the target code rate, wherein the coding parameters may include the code rate of coded data and the packaging parameters may include the code rate of the protected data; capture part of or entire stream from the coded data corresponding to the transmission position of the protected data according to the adjusted packaging parameters and take the part of or entire stream as protected data; and when a continuous packet loss rate is lower than a preset continuous packet loss rate threshold, place the transmission position of the protected data in the next frame; and when the continuous packet loss rate is greater than the preset continuous packet loss rate threshold, place the transmission position of the protected data in the frame after the next frame.

### Embodiment 4

Referring to Fig. 4, the embodiment of the present disclosure provides a receiving end, which includes a receiving unit 41, a counting unit 42 and a determining unit 43; wherein,
the receiving unit 41 may be configured to receive a payload containing coded data and protected data transmitted by a transmitting end;
the counting unit 42 may be configured to count network status parameters according to the payload received by the receiving unit 41 and transmit the network status parameters to the transmitting end; and
the determining unit 43 may be configured to determine whether a coded packet is lost according to the payload received by the receiving unit 41, and when determining that the coded packet is lost, recover the lost coded packet according to the received payload.

In summary, the embodiments of the present disclosure provide an anti-packet-loss real-time communication method, system and related device. A receiving end counts the current network status parameters in real-time and transmits the network status parameters to a transmitting end, the transmitting end adjusts coding parameters and packaging parameters in real time according to the current network status parameter, and assigns a code rate of coded data and a code rate of protected data in the packaged payload according to the coding parameters and the packaging parameters. The embodiments of the present disclosure perform self-adaptive processing on packet loss or congestion occurring in a network during real-time communication, i.e., adjust the code rate and transmission position of protected data in real time according to network conditions, thereby effectively preventing voice discontinuousness, image mess or pause occurring at a client, and improving the user experience.

The contents described above are only the preferred specific implementing modes of the present disclosure. However, the scope of the present disclosure is not limited thereto. Any changes or replacements in the technical scope of the present disclosure that can be easily thought of by those skills in the art should be covered with the protection scope of the present disclosure. Therefore, the protection scope of the the present disclosure should be subject to that of the claims.

### Industrial Applicability

The embodiments of the present disclosure provide an anti-packet-loss real-time communication method, system and related device. A receiving end counts the current network status parameters in real-time and transmits the network status parameters to a transmitting end, the transmitting end adjusts coding parameters and packaging parameters in real time according to the current network status parameter, and assigns a code rate of coded data and a code rate of protected data in the packaged payload according to the coding parameters and the packaging parameters. The embodiments of the present disclosure perform self-adaptive processing on packet loss or congestion occurring in a network during real-time communication, i.e., adjust the code rate and transmission position of protected data in real time according to network conditions, thereby effectively preventing voice discontinuousness, image mess or pause occurring at a client, and improving the user experience.

## Claims

1. A method for anti-packet-loss real-time communication, comprising:
generating (S102), by a transmitting end, a payload containing coded data and protected data simultaneously according to coding parameters and packaging parameters which have been set, and transmitting (S102) the payload to a receiving end;
counting (S103), by the receiving end, network status parameters according to the received payload and transmitting (S103) the network status parameters to the transmitting end, the network status parameters comprising one or more of: a packet loss rate, a continuous packet loss rate or a target code rate; and
adjusting (S105), by the transmitting end, the coding parameters and the packaging parameters in real time according to the network status parameters, and (S105) generating a payload containing coded data and protected data simultaneously according to the adjusted coding parameters and packaging parameters; and
determining, by the receiving end, whether a coded packet in the coded data is lost according to the received payload, and, when determining that the coded packet is lost, finding protected data corresponding to the lost coded packet according to indication information about a transmission position in the received payload, and recovering the lost coded packet, the transmission position being in a next frame or a frame after a next frame;
wherein the adjusting (S105), by the transmitting end, the coding parameters and the packaging parameters in real time according to the network status parameters comprises:
setting, by the transmitting end, the target code rate according to the network status parameters, and, adjusting the coding parameters and the packaging parameters in real time according to the target code rate and the packet loss rate by:
when the packet loss rate is lower than or equal to a preset packet loss rate threshold, setting a code rate of the coded data only according to the target code rate without addition of protected data;
when the packet loss rate is greater than the preset packet loss rate threshold, increasing a code rate of the protected data within limits of the target code rate, wherein the coding parameters comprise the code rate of the coded data and the packaging parameters comprise the code rate of the protected data;
**characterized in that**, the method further comprises:
capturing part of or entire stream from coded data corresponding to a transmission position of the protected data according to the adjusted packaging parameters and taking the part of or entire stream as protected data;
when the continuous packet loss rate is lower than a preset continuous packet loss rate threshold, placing the transmission position of the protected data in a next frame; and
when the continuous packet loss rate is greater than the preset continuous packet loss rate threshold, placing the transmission position of the protected data in a frame after the next frame, while adding indication information about the transmission position into the payload.

2. The method according to claim 1, wherein the network status parameters further comprise one or more of: a packet loss rate, a continuous packet loss rate, delay and jitter.

3. A system for anti-packet-loss real-time communication, comprising a transmitting end and a receiving end; wherein,
the transmitting end is configured to generate a payload containing coded data and packaged data simultaneously according to coding parameters and packaging parameters which have been set and transmit the payload to the receiving end; and adjust the coding parameters and the packaging parameters in real time according to network status parameters transmitted by the receiving end, and generate a payload containing coded data and protected data simultaneously according to the adjusted coding parameters and packaging parameters; and
the receiving end is configured to receive the payload transmitted by the transmitting end, count the network status parameters according to the payload and transmit the network status parameters to the transmitting end;
the receiving end is further configured to determine whether a coded packet in the coded data is lost according to the payload transmitted by the transmitting end, and when determining that the coded packet is lost, find protected data corresponding to the lost coded packet according to indication information about a transmission position in the payload, and recover the lost coded packet, the transmission position being in a next frame or a frame after a next frame;
wherein the network status parameters comprise one or more of: a packet loss rate, a continuous packet loss rate and a target code rate;
wherein the adjusting, by the transmitting end, the coding parameters and the packaging parameters in real time according to the network status parameters comprises:
setting, by the transmitting end, the target code rate according to the network status parameters and adjusting the coding parameters and the packaging parameters in real time according to the target code rate and the packet loss rate;
wherein the adjusting the coding parameters and the packaging parameters in real time according to the target code rate and the packet loss rate comprises:
when the packet loss rate is lower than or equal to a preset packet loss rate threshold, setting a code rate of the coded data only according to the target code rate without addition of protected data;
when the packet loss rate is greater than the preset packet loss rate threshold, increasing a code rate of the protected data within limits of the target code rate, wherein the coding parameters comprise the code rate of the coded data and the packaging parameters comprise the code rate of the protected data;
**characterized in that**, the transmitting end is further configured to:
capture part of or entire stream from coded data corresponding to a transmission position of the protected data according to the adjusted packaging parameters and take the part of or entire stream as protected data;
when the continuous packet loss rate is lower than a preset continuous packet loss rate threshold, place the transmission position of the protected data in a next frame; and
when the continuous packet loss rate is greater than the preset continuous packet loss rate threshold, place the transmission position of the protected data in a frame after the next frame, while adding indication information about the transmission position into the payload.

4. A transmitting end comprising:
a setting unit (31) configured to set coding parameters and packaging parameters and transmit the coding parameters and the packaging parameters to a coding unit;
the coding unit (32) is configured to generate a payload containing coded data and protected data simultaneously according to the coding parameters and the packaging parameters transmitted by the setting unit or the coding parameters and packaging parameters adjusted and transmitted by a adjusting unit, and transmit the payload to a receiving end; and
the adjusting unit (33) is configured to adjust the coding parameters and the packaging parameters in real time according to network status parameters transmitted by the receiving end, and transmit the adjusted coding parameters and packaging parameters to the coding unit;
wherein the adjusting unit (33) is configured:
to set a target code rate according to the network status parameters transmitted by the receiving end;
when a packet loss rate is lower than or equal to a preset packet loss rate threshold, to set a code rate of the coded data only according to the target code rate without addition of protected data; and
when the packet loss rate is greater than the preset packet loss rate threshold, to increase a code rate of the protected data within limits of the target code rate, wherein the coding parameters comprise the code rate of coded data and the packaging parameters comprise the code rate of the protected data;
**characterized in that** the adjusting unit (33) is further configured:-
to capture part of or entire stream from coded data corresponding to a transmission position of the protected data according to the adjusted packaging parameters and take the part of or entire stream as protected data;
when a continuous packet loss rate is lower than a preset continuous packet loss rate threshold, to place the transmission position of the protected data in a next frame; and
when the continuous packet loss rate is greater than the preset continuous packet loss rate threshold, to place the transmission position of the protected data in a frame after the next frame.

5. A receiving end, comprising:
a receiving unit (41) configured to receive a payload containing coded data and protected data transmitted by a transmitting end; and
a counting unit (42) configured to count network status parameters according to the payload received by the receiving unit and transmit the network status parameters to the transmitting end to adjust coding parameters and packaging parameters in real time according to the network status parameters and generate the payload containing the coded data and the protected data simultaneously according to the adjusted coding parameters and packaging parameters;
wherein the receiving end further comprises:
a determining unit (43) configured to determine whether a coded packet in the coded data is lost according to the payload received by the receiving unit, and when determining that the coded packet is lost, find protected data corresponding to the lost coded packet according to indication information about a transmission position in the received payload, and recover the lost coded packet, the transmission position being in a next frame or a frame after a next frame;
wherein the network status parameters comprises one or more of a packet loss rate, a continuous packet loss rate or a target code rate;
wherein the adjusting, by the transmitting end, the coding parameters and the packaging parameters in real time according to the network status parameters comprises:
setting, by the transmitting end, the target code rate according to the network status parameters and adjusting the coding parameters and the packaging parameters in real time according to the target code rate and the packet loss rate;
wherein the adjusting the coding parameters and the packaging parameters in real time according to the target code rate and the packet loss rate comprises:
when the packet loss rate is lower than or equal to a preset packet loss rate threshold, setting a code rate of the coded data only according to the target code rate without addition of protected data;
when the packet loss rate is greater than the preset packet loss rate threshold, increasing a code rate of the protected data within limits of the target code rate, wherein the coding parameters comprise the code rate of the coded data and the packaging parameters comprise the code rate of the protected data;
**characterized in that**, part of or entire stream from coded data corresponding to a transmission position of the protected data is captured by the transmitting end according to the adjusted packaging parameters and the part of or entire stream is taken as protected data; when the continuous packet loss rate is lower than a preset continuous packet loss rate threshold, the transmission position of the protected data is placed in a next frame; and when the continuous packet loss rate is greater than the preset continuous packet loss rate threshold, the transmission position of the protected data is placed in a frame after the next frame, while indication information about the transmission position is added into the payload.

## Patentansprüche

1. Echtzeitkommunikationsverfahren gegen Paketverlust, umfassend:
Erzeugen (S102), durch ein Übertragungsende, von einer Nutzlast, die kodierte Daten und geschützte Daten gleichzeitig enthält, gemäß Codierungsparametern und Verpackungsparametern, die festgelegt wurden, und Übertragen (S102) der Nutzlast an ein Empfangsende;
Zählen (S103), durch das Empfangsende, von Netzwerkstatusparametern gemäß der empfangenen Nutzlast und Übertragen (S103) der Netzwerkstatusparameter an das Übertragungsende, wobei die Netzwerkstatusparameter eines oder mehrere umfassen von: einer Paketverlustrate, einer laufenden Paketverlustrate oder eine Zielcoderate; und
Einstellen (S105), durch das Übertragungsende, der Codierungsparameter und der Verpackungsparameter in Echtzeit gemäß den Netzwerkstatusparametern, und (S105) Erzeugen von einer Nutzlast, die kodierte Daten und geschützte Daten gleichzeitig enthält, gemäß den eingestellten Codierungsparametern und Verpackungsparametern; und
Bestimmen, durch das Empfangsende, ob ein codiertes Paket in den codierten Daten gemäß der empfangenen Nutzlast verloren wurde, und bei Bestimmen, dass das codierte Paket verloren wurde, Finden von geschützten Daten, die dem verlorenen codierten Paket entsprechen, gemäß einer Anzeigeinformation über eine Übertragungsposition in der empfangenen Nutzlast, und Wiedererlangen des verlorenen codierten Pakets, wobei die Übertragungsposition in einem nächsten Frame oder einem Frame nach einem nächsten Frame ist;
wobei das Einstellen (S105), durch das Übertragungsende, der Codierungsparameter und der Verpackungsparameter in Echtzeit gemäß den Netzwerkstatusparametern umfasst:
Festlegen, durch das Übertragungsende, der Zielcoderate gemäß den Netzwerkstatusparametern und Einstellen der Codierungsparameter und der Verpackungsparameter in Echtzeit gemäß der Zielcoderate und der Paketverlustrate durch:
wenn die Paketverlustrate geringer als oder gleich einer vorfestgelegten Paketverlustratenschwelle ist, Festlegen einer Coderate der codierten Daten nur gemäß der Zielcoderate ohne Hinzufügen von geschützten Daten;
wenn die Paketverlustrate größer als die vorfestgelegte Paketverlustratenschwelle ist, Erhöhen einer Coderate der geschützten Daten innerhalb von Grenzen der Zielcoderate, wobei die Codierungsparameter die Coderate der codierten Daten umfassen und die Verpackungsparameter die Coderate der geschützten Daten umfassen;
**dadurch gekennzeichnet, dass** das Verfahren weiter umfasst:
Erfassen eines Teil- oder Gesamtstroms von codierten Daten, die einer Übertragungsposition der geschützten Daten entsprechen, gemäß den eingestellten Verpackungsparametern und Übernehmen des Teil- oder Gesamtstroms als geschützte Daten;
wenn die laufende Paketverlustrate geringer als eine vorfestgelegte laufende Paketverlustratenschwelle ist, Setzen der Übertragungsposition der geschützten Daten in einen nächsten Frame; und
wenn die laufende Paketverlustrate größer als die vorfestgelegte laufende Paketverlustratenschwelle ist, Platzieren der Übertragungsposition der geschützten Daten in einen Frame nach dem nächsten Frame, während Anzeigeinformation über die Übertragungsposition in die Nutzlast hinzugefügt wird.

2. Verfahren nach Anspruch 1, wobei die Netzwerkstatusparameter eines oder mehrere umfassen von: einer Paketverlustrate, einer laufenden Paketverlustrate, Verspätung und Jitter.

3. Echtzeitkommunikationssystem gegen Paketverlust, umfassend ein Übertragungsende und ein Empfangsende; wobei
das Übertragungsende konfiguriert ist, um eine Nutzlast, die kodierte Daten und verpackte Daten gleichzeitig enthält, gemäß Codierungsparametern und Verpackungsparametern, die festgelegt wurden, zu erzeugen, und die Nutzlast an das Empfangsende zu übertragen; und die Codierungsparameter und die Verpackungsparameter in Echtzeit gemäß Netzwerkstatusparametern, die durch das Empfangsende übertragen werden, einzustellen, und eine Nutzlast, die kodierte Daten und geschützte Daten gleichzeitig enthält, gemäß den eingestellten Codierungsparametern und Verpackungsparametern zu erzeugen; und
das Empfangsende konfiguriert ist, um die Nutzlast, die durch das Übertragungsende übertragen wird, zu empfangen, die Netzwerkstatusparameter gemäß der Nutzlast zu zählen und die Netzwerkstatusparameter an das Übertragungsende zu übertragen;
das Empfangsende weiter konfiguriert ist, um gemäß der Nutzlast, die durch das Übertragungsende übertragen wird, zu bestimmen, ob ein codiertes Paket in den codierten Daten verloren wurde, und bei Bestimmen, dass das codierte Paket verloren wurde, Finden von geschützten Daten, die dem verlorenen codierten Paket entsprechen, gemäß einer Anzeigeinformation über eine Übertragungsposition in der Nutzlast, und Wiedererlangen des verlorenen codierten Pakets, wobei die Übertragungsposition in einem nächsten Frame oder einem Frame nach einem nächsten Frame ist;
wobei die Netzwerkstatusparameter eines oder mehrere umfassen von: einer Paketverlustrate, einer laufenden Paketverlustrate und einer Zielcoderate;
wobei das Einstellen, durch das Übertragungsende, der Codierungsparameter und der Verpackungsparameter in Echtzeit gemäß den Netzwerkstatusparametern umfasst:
Festlegen, durch das Übertragungsende, der Zielcoderate gemäß den Netzwerkstatusparametern und Einstellen der Codierungsparameter und der Verpackungsparameter in Echtzeit gemäß der Zielcoderate und der Paketverlustrate;
wobei das Einstellen der Codierungsparameter und der Verpackungsparameter in Echtzeit gemäß der Zielcoderate und der Paketverlustrate umfasst:
wenn die Paketverlustrate geringer als oder gleich einer vorfestgelegten Paketverlustratenschwelle ist, Festlegen einer Coderate der codierten Daten nur gemäß der Zielcoderate ohne Hinzufügen von geschützten Daten;
wenn die Paketverlustrate größer als die vorfestgelegte Paketverlustratenschwelle ist, Erhöhen einer Coderate der geschützten Daten innerhalb von Grenzen der Zielcoderate, wobei die Codierungsparameter die Coderate der codierten Daten umfassen und die Verpackungsparameter die Coderate der geschützten Daten umfasst;
**dadurch gekennzeichnet, dass** das Übertragungsende weiter konfiguriert ist zum:
Erfassen eines Teil- oder Gesamtstroms von codierten Daten, die einer Übertragungsposition der geschützten Daten entsprechen, gemäß den eingestellten Verpackungsparametern, und Übernehmen des Teil- oder Gesamtstroms als geschützte Daten;
wenn die laufende Paketverlustrate geringer als eine vorfestgelegte laufende Paketverlustratenschwelle ist, Platzieren der Übertragungsposition der geschützten Daten in einen nächsten Frame; und
wenn die laufende Paketverlustrate größer als die vorfestgelegte laufende Paketverlustratenschwelle ist, Platzieren der Übertragungsposition der geschützten Daten in einen Frame nach dem nächsten Frame, während Anzeigeinformation über die Übertragungsposition in die Nutzlast hinzugefügt wird.

4. Übertragungsende, umfassend:
eine Festlegungseinheit (31), die konfiguriert ist, um Codierungsparameter und Verpackungsparameter festzulegen und die Codierungsparameter und die Verpackungsparameter an eine Codierungseinheit zu übertragen;
wobei die Codierungseinheit (32) konfiguriert ist, um eine Nutzlast, die kodierte Daten und geschützte Daten gleichzeitig enthält, gemäß den Codierungsparametern und den Verpackungsparametern, die durch die Festlegungseinheit übertragen werden, oder den Codierungsparametern und den Verpackungsparametern, die durch eine Einstelleinheit eingestellt und übertragen werden, zu erzeugen, und die Nutzlast an ein Empfangsende zu übertragen; und
die Einstelleinheit (33) konfiguriert ist, um die Codierungsparameter und die Verpackungsparameter in Echtzeit gemäß Netzwerkstatusparametern, die durch das Empfangsende übertragen werden, einzustellen, und die eingestellten Codierungsparameter und Verpackungsparameter an die Codierungseinheit zu übertragen;
wobei die Einstelleinheit (33) konfiguriert ist zum:
Festlegen einer Zielcoderate gemäß den Netzwerkstatusparametern, die durch das Empfangsende übertragen werden;
wenn eine Paketverlustrate geringer als oder gleich einer vorfestgelegten Paketverlustratenschwelle ist, Festlegen einer Coderate der codierten Daten nur gemäß der Zielcoderate ohne Hinzufügen von geschützten Daten; und
wenn die Paketverlustrate größer als die vorfestgelegte Paketverlustratenschwelle ist, Erhöhen einer Coderate der geschützten Daten innerhalb von Grenzen der Zielcoderate, wobei die Codierungsparameter die Coderate der codierten Daten umfassen und die Verpackungsparameter die Coderate der geschützten Daten umfassen;
**dadurch gekennzeichnet, dass** die Einstelleinheit (33) weiter konfiguriert ist zum:
Erfassen eines Teil- oder Gesamtstroms von codierten Daten, die einer Übertragungsposition der geschützten Daten entsprechen, gemäß den eingestellten Verpackungsparametern und Übernehmen des Teil- oder Gesamtstroms als geschützte Daten;
wenn eine laufende Paketverlustrate geringer als eine vorfestgelegte laufende Paketverlustratenschwelle ist, Platzieren der Übertragungsposition der geschützten Daten in einen nächsten Frame; und
wenn die laufende Paketverlustrate größer als die vorfestgelegte laufende Paketverlustratenschwelle ist, Platzieren der Übertragungsposition der geschützten Daten in einen Frame nach dem nächsten Frame.

5. Empfangsende, umfassend:
eine Empfangseinheit (41), die konfiguriert ist, um eine Nutzlast, die kodierte Daten und geschützte Daten enthält, die durch ein Übertragungsende übertragen werden, zu empfangen; und
eine Zähleinheit (42), die konfiguriert ist, um Netzwerkstatusparameter gemäß der Nutzlast zu zählen, die durch die Empfangseinheit empfangen wird, und die Netzwerkstatusparameter an das Übertragungsende zu übertragen, um Codierungsparameter und Verpackungsparameter in Echtzeit gemäß den Netzwerkstatusparametern einzustellen und die Nutzlast, die die kodierten Daten und die geschützten Daten gleichzeitig enthält, gemäß den eingestellten Codierungsparametern und Verpackungsparametern zu erzeugen;
wobei das Empfangsende weiter umfasst:
eine Bestimmungseinheit (43), die konfiguriert ist, um zu bestimmen, ob ein codiertes Paket in den codierten Daten verloren wurde, gemäß der Nutzlast, die durch die Empfangseinheit empfangen wird, und bei Bestimmen, dass das codierte Paket verloren wurde, Finden von geschützten Daten, die dem verlorenen codierten Paket entsprechen, gemäß einer Anzeigeinformation über eine Übertragungsposition in der empfangenen Nutzlast, und Wiedererlangen des verlorenen codierten Pakets, wobei die Übertragungsposition in einem nächsten Frame oder einem Frame nach einem nächsten Frame ist;
wobei die Netzwerkstatusparameter eines oder mehrere von einer Paketverlustrate, einer laufenden Paketverlustrate oder einer Zielcoderate umfasst;
wobei das Einstellen, durch das Übertragungsende, der Codierungsparameter und der Verpackungsparameter in Echtzeit gemäß den Netzwerkstatusparametern umfasst:
Festlegen, durch das Übertragungsende, der Zielcoderate gemäß den Netzwerkstatusparametern und Einstellen der Codierungsparameter und der Verpackungsparameter in Echtzeit auf die Zielcoderate und die Paketverlustrate;
wobei das Einstellen der Codierungsparameter und der Verpackungsparameter in Echtzeit gemäß der Zielcoderate und der Paketverlustrate umfasst:
wenn die Paketverlustrate geringer als oder gleich einer vorfestgelegten Paketverlustratenschwelle ist, Festlegen einer Coderate der codierten Daten nur gemäß der Zielcoderate ohne Hinzufügen von geschützten Daten;
wenn die Paketverlustrate größer als die vorfestgelegte Paketverlustratenschwelle ist, Erhöhen einer Coderate der geschützten Daten innerhalb von Grenzen der Zielcoderate, wobei die Codierungsparameter die Coderate der codierten Daten umfassen und die Verpackungsparameter die Coderate der geschützten Daten umfassen;
**dadurch gekennzeichnet, dass** ein Teil- oder Gesamtstrom von codierten Daten, die einer Übertragungsposition der geschützten Daten entsprechen, durch das Übertragungsende gemäß den eingestellten Verpackungsparametern erfasst wird und der Teil- oder Gesamtstrom als geschützte Daten übernommen wird; wenn die laufende Paketverlustrate geringer als eine vorfestgelegte laufende Paketverlustratenschwelle ist, die Übertragungsposition der geschützten Daten in einen nächsten Frame gesetzt wird; und wenn die laufende Paketverlustratenschwelle größer als die vorfestgelegte laufende Paketverlustratenschwelle ist, die Übertragungsposition der geschützten Daten in einen Frame nach dem nächsten Frame gesetzt wid, während Anzeigeinformation über die Übertragungsposition in die Nutzlast hinzugefügt wird.

## Revendications

1. Procédé de communication en temps réel antiperte de paquet, comprenant :
la génération (S102), par une extrémité de transmission, d'une charge utile contenant des données codées et des données protégées simultanément selon des paramètres de codage et des paramètres d'encapsulation qui ont été établis, et la transmission (S102) de la charge utile à une extrémité de réception ;
le comptage (S103), par l'extrémité de réception, de paramètres de statut de réseau selon la charge utile reçue et la transmission (S103) des paramètres de statut de réseau à l'extrémité de transmission, les paramètres de statut de réseau comprenant un ou plusieurs parmi : un débit de perte de paquet, un débit de perte de paquet continu ou un débit de code cible ; et
l'ajustement (S105), par l'extrémité de transmission, les paramètres de codage et des paramètres d'encapsulation en temps réel selon les paramètres de statut de réseau, et (S105) la génération d'une charge utile contenant des données codées et des données protégées simultanément selon les paramètres de codage et les paramètres d'encapsulation ajustés ; et
le fait de déterminer, par l'extrémité de réception, si un paquet codé dans les données codées est perdu selon la charge utile reçue, et, lors de la détermination que le paquet codé est perdu, le fait de trouver des données protégées correspondant au paquet codé perdu selon des informations d'indication concernant une position de transmission dans la charge utile reçue, et la récupération du paquet codé perdu, la position de transmission étant dans une trame suivante ou une trame après une trame suivante ;
dans lequel l'ajustement (S105), par l'extrémité de transmission, des paramètres de codage et des paramètres d'encapsulation en temps réel selon les paramètres de statut de réseau comprend :
l'établissement, par l'extrémité de transmission, du débit de code cible selon les paramètres de statut de réseau, et, l'ajustement des paramètres de codage et des paramètres d'encapsulation en temps réel selon le débit de code cible et le débit de perte de paquet par :
lorsque le débit de perte de paquet est inférieur ou égal à un seuil de débit de perte de paquet préétabli, l'établissement d'un débit de code des données codées uniquement selon le débit de code cible sans ajout de données protégées ;
lorsque le débit de perte de paquet est supérieur au seuil de débit de perte de paquet préétabli, l'augmentation d'un débit de code des données protégées dans des limites du débit de code cible, dans lequel les paramètres de codage comprennent le débit de code des données codées et les paramètres d'encapsulation comprennent le débit de code des données protégées ;
**caractérisé en ce que** le procédé comprend en outre :
la capture d'une partie ou d'un flux entier de données codées correspondant à une position de transmission des données protégées selon les paramètres d'encapsulation ajustés et le fait de prendre la partie ou le flux entier en tant que données protégées ;
lorsque le débit de perte de paquet continu est inférieur à un seuil de débit de perte de paquet continu préétabli, le placement de la position de transmission des données protégées dans une trame suivante ; et
lorsque le débit de perte de paquet continu est supérieur au seuil de débit de perte de paquet continu préétabli, le placement de la position de transmission des données protégées dans une trame après la trame suivante, tout en ajoutant des informations d'indication concernant la position de transmission dans la charge utile.

2. Procédé selon la revendication 1, dans lequel les paramètres de statut de réseau comprennent en outre un ou plusieurs parmi : un débit de perte de paquet, un débit de perte de paquet continu, un retard et une gigue.

3. Système de communication en temps réel antiperte de paquet, comprenant une extrémité de transmission et une extrémité de réception ; dans lequel,
l'extrémité de transmission est configurée pour générer une charge utile contenant des données codées et des données encapsulées simultanément selon des paramètres de codage et des paramètres d'encapsulation qui ont été établis et transmettre la charge utile à l'extrémité de réception ; et ajuster les paramètres de codage et les paramètres d'encapsulation en temps réel selon des paramètres de statut de réseau transmis par l'extrémité de réception, et générer une charge utile contenant des données codées et des données protégées simultanément selon les paramètres de codage et les paramètres d'encapsulation ajustés ; et
l'extrémité de réception est configurée pour recevoir la charge utile transmise par l'extrémité de transmission, compter les paramètres de statut de réseau selon la charge utile et transmettre les paramètres de statut de réseau à l'extrémité de transmission ;
l'extrémité de réception est en outre configurée pour déterminer si un paquet codé dans les données codées est perdu selon la charge utile transmise par l'extrémité de transmission, et, lors de la détermination que le paquet codé est perdu, trouver des données protégées correspondant au paquet codé perdu selon des informations d'indication concernant une position de transmission dans la charge utile, et récupérer le paquet codé perdu, la position de transmission étant dans une trame suivante ou une trame après une trame suivante ;
dans lequel les paramètres de statut de réseau comprennent un ou plusieurs parmi : un débit de perte de paquet, un débit de perte de paquet continu et un débit de code cible ;
dans lequel l'ajustement, par l'extrémité de transmission, des paramètres de codage et des paramètres d'encapsulation en temps réel selon les paramètres de statut de réseau comprend :
l'établissement, par l'extrémité de transmission, du débit de code cible selon les paramètres de statut de réseau, et l'ajustement des paramètres de codage et des paramètres d'encapsulation en temps réel selon le débit de code cible et le débit de perte de paquet ;
dans lequel l'ajustement des paramètres de codage et des paramètres d'encapsulation en temps réel selon le débit de code cible et le débit de perte de paquet comprend :
lorsque le débit de perte de paquet est inférieur ou égal à un seuil de débit de perte de paquet préétabli, l'établissement d'un débit de code des données codées uniquement selon le débit de code cible sans ajout de données protégées ;
lorsque le débit de perte de paquet est supérieur au seuil de débit de perte de paquet préétabli, l'augmentation d'un débit de code des données protégées dans des limites du débit de code cible, dans lequel les paramètres de codage comprennent le débit de code des données codées et les paramètres d'encapsulation comprennent le débit de code des données protégées ;
**caractérisé en ce que**, l'extrémité de transmission est en outre configurée pour :
capturer une partie ou un flux entier de données codées correspondant à une position de transmission des données protégées selon les paramètres d'encapsulation ajustés et prendre la partie ou le flux entier en tant que données protégées ;
lorsque le débit de perte de paquet continu est inférieur à un seuil de débit de perte de paquet continu préétabli, placer la position de transmission des données protégées dans une trame suivante ; et
lorsque le débit de perte de paquet continu est supérieur au seuil de débit de perte de paquet continu préétabli, placer la position de transmission des données protégées dans une trame après la trame suivante, tout en ajoutant des informations d'indication concernant la position de transmission dans la charge utile.

4. Extrémité de transmission comprenant :
une unité d'établissement (31) configurée pour établir des paramètres de codage et des paramètres d'encapsulation et transmettre les paramètres de codage et les paramètres d'encapsulation à une unité de codage ;
l'unité de codage (32) est configurée pour générer une charge utile contenant des données codées et des données protégées simultanément selon les paramètres de codage et les paramètres d'encapsulation transmis par l'unité d'établissement ou les paramètres de codage et les paramètres d'encapsulation ajustés et transmis par une unité d'ajustement, et transmettre la charge utile à une extrémité de réception ; et
l'unité d'ajustement (33) est configurée pour ajuster les paramètres de codage et les paramètres d'encapsulation en temps réel selon des paramètres de statut de réseau transmis par l'extrémité de réception, et transmettre les paramètres de codage et les paramètres d'encapsulation ajustés à l'unité de codage ;
dans laquelle l'unité d'ajustement (33) est configurée :
pour établir un débit de code cible selon les paramètres de statut de réseau transmis par l'extrémité de réception ;
lorsqu'un débit de perte de paquet est inférieur ou égal à un seuil de débit de perte de paquet préétabli, pour établir un débit de code des données codées uniquement selon le débit de code cible sans ajout de données protégées ; et
lorsque le débit de perte de paquet est supérieur au seuil de débit de perte de paquet préétabli, pour augmenter un débit de code des données protégées dans des limites du débit de code cible, dans laquelle les paramètres de codage comprennent le débit de code de données codées et les paramètres d'encapsulation comprennent le débit de code des données protégées ;
**caractérisée en ce que** l'unité d'ajustement (33) est en outre configurée :
pour capturer une partie ou un flux entier de données codées correspondant à une position de transmission des données protégées selon les paramètres d'encapsulation ajustés et prendre la partie ou le flux entier en tant que données protégées ;
lorsqu'un débit de perte de paquet continu est inférieur à un seuil de débit de perte de paquet continu préétabli, pour placer la position de transmission des données protégées dans une trame suivante ; et
lorsque le débit de perte de paquet continu est supérieur au seuil de débit de perte de paquet continu préétabli, pour placer la position de transmission des données protégées dans une trame après la trame suivante.

5. Extrémité de réception, comprenant :
une unité de réception (41) configurée pour recevoir une charge utile contenant des données codées et des données protégées transmises par une extrémité de transmission ; et
une unité de comptage (42) configurée pour compter des paramètres de statut de réseau selon la charge utile reçue par l'unité de réception et transmettre les paramètres de statut de réseau à l'extrémité de transmission pour ajuster des paramètres de codage et des paramètres d'encapsulation en temps réel selon les paramètres de statut de réseau et générer la charge utile contenant les données codées et les données protégées simultanément selon les paramètres de codage et les paramètres d'encapsulation ajustés ;
dans laquelle l'extrémité de réception comprend en outre :
une unité de détermination (43) configurée pour déterminer si un paquet codé dans les données codées est perdu selon la charge utile reçue par l'unité de réception, et lors de la détermination que le paquet codé est perdu, trouver des données protégées correspondant au paquet codé perdu selon des informations d'indication concernant une position de transmission dans la charge utile reçue, et récupérer le paquet codé perdu, la position de transmission étant dans une trame suivante ou une trame après une trame suivante ;
dans laquelle les paramètres de statut de réseau comprennent un ou plusieurs parmi un débit de perte de paquet, un débit de perte de paquet continu ou un débit de code cible ;
dans laquelle l'ajustement, par l'extrémité de transmission, des paramètres de codage et des paramètres d'encapsulation en temps réel selon les paramètres de statut de réseau comprend :
l'établissement, par l'extrémité de transmission, du débit de code cible selon les paramètres de statut de réseau et l'ajustement des paramètres de codage et des paramètres d'encapsulation en temps réel selon le débit de code cible et le débit de perte de paquet ;
dans laquelle l'ajustement des paramètres de codage et des paramètres d'encapsulation en temps réel selon le débit de code cible et le débit de perte de paquet comprend :
lorsque le débit de perte de paquet est inférieur ou égal à un seuil de débit de perte de paquet préétabli, l'établissement d'un débit de code des données codées uniquement selon le débit de code cible sans ajout de données protégées ;
lorsque le débit de perte de paquet est supérieur au seuil de débit de perte de paquet préétabli, l'augmentation d'un débit de code des données protégées dans des limites du débit de code cible, dans laquelle les paramètres de codage comprennent le débit de code des données codées et les paramètres d'encapsulation comprennent le débit de code des données protégées ;
**caractérisée en ce que**, une partie ou un flux entier de données codées correspondant à une position de transmission des données protégées est capturé par l'extrémité de transmission selon les paramètres d'encapsulation ajustés et la partie ou le flux entier est pris en tant que données protégées ; lorsque le débit de perte de paquet continu est inférieur à un seuil de débit de perte de paquet continu préétabli, la position de transmission des données protégées est placée dans une trame suivante ; et lorsque le débit de perte de paquet continu est supérieur au seuil de débit de perte de paquet continu préétabli, la position de transmission des données protégées est placée dans une trame après la trame suivante, tandis que des informations d'indication concernant la position de transmission sont ajoutées dans la charge utile.
